(19) **Europäisches Patentamt**
**European Patent Office**
**Office européen des brevets**

(11) **EP 4 340 213 B1**

(12) **EUROPEAN PATENT SPECIFICATION**

(45) Date of publication and mention
of the grant of the patent:
**12.02.2025 Bulletin 2025/07**

(21) Application number: **22851605.0**

(22) Date of filing: **12.04.2022**

(51) International Patent Classification (IPC):
***H02P 23/14*** *(2006.01)*

(52) Cooperative Patent Classification (CPC):
**H02P 23/14**

(86) International application number:
**PCT/CN2022/086241**

(87) International publication number:
**WO 2023/010881 (09.02.2023 Gazette 2023/06)**

(54) **DIRECT CURRENT ESTIMATION METHOD AND SYSTEM BASED ON DIRECT-CURRENT BUS VOLTAGE**

GLEICHSTROMSCHÄTZUNGSVERFAHREN UND -SYSTEM AUF BASIS VON GLEICHSTROMBUSSPANNUNG

PROCÉDÉ ET SYSTÈME D'ESTIMATION DE COURANT CONTINU BASÉS SUR UNE TENSION DE BUS À COURANT CONTINU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2021 CN 202110885079**

(43) Date of publication of application:
**20.03.2024 Bulletin 2024/12**

(73) Proprietors:
• **Leadrive Technology (Shanghai) Co. Ltd**
**Shanghai 201203 (CN)**
• **Shanghai Lingang Power Electronics Research Institute Co., Ltd**
**Shanghai 200120 (CN)**

(72) Inventor: **SHEN, Jie**
**Shanghai 201203 (CN)**

(74) Representative: **Ridderbusch, Oliver**
**Prisma IP**
**Patentanwaltskanzlei**
**Landsberger Straße 155, Haus 1**
**80687 München (DE)**

(56) References cited:
| | |
|---|---|
| **EP-A2- 1 443 634** | **CN-A- 101 227 168** |
| **CN-A- 107 449 962** | **CN-A- 108 418 485** |
| **CN-A- 109 756 167** | **CN-A- 111 505 475** |
| **CN-A- 111 628 688** | **CN-A- 111 628 688** |
| **CN-A- 113 328 675** | **DE-A1- 102015 205 954** |
| **JP-A- 2008 086 098** | |

## Description

### FIELD OF THE INVENTION

The present invention relates to the technical field of motor control, in particular to a DC current estimation method and system based on DC bus voltage.

### BACKGROUND OF THE INVENTION

During use of motors and motor controllers, in particular as for motors of new energy vehicles, it is often necessary to calculate DC current according to AC power, MCU efficiency and DC link voltage in real time.

As the MCU efficiency varies with the DC bus voltage, in an existing operation, it is necessary to make a corresponding table where each DC bus voltage is paired with the MCU efficiency of each DC bus voltage, so that DC current is calculated by calling the corresponding table in the actual driving process of vehicles, resulting in a huge measurement workload due to the necessity of calling the efficiency tables corresponding to multiple voltages in the above process.

Therefore, a new DC current estimation method based on DC bus voltage is required to enable the measurement workload to reduce

Document CN-111628688 discloses a DC bus current detection method of a motor controller that does without directly measuring the DC bus current. Several parameters must be measured for providing the components that add up to the DC power, which is then used, together with the DC voltage, for calculating the DC bus current.

### SUMMARY OF THE INVENTION

In order to overcome the above technical defects, the objective of the present invention is to provide a DC current estimation method and system based on DC bus voltage, so as to accurately estimate DC current.

The present invention discloses a DC current estimation method based on DC bus voltage comprising the following steps:

outputting a DC bus voltage $V_0$ of a motor controller in a test environment, and calibrating a loss power $P_{loss}(V_0)$ under the DC bus voltage $V_0$;
calibrating and measuring a switch loss power $P_{sw}(V_0)$ of the power module of the motor controller;
calculating an AC current-related loss power $P_{iactoss}(V_0)$ based on the loss power $P_{loss}(V_0)$ and the switch loss power $P_{sw}(V_0)$;
in the actual operation environment of the motor and motor controller, obtaining an actual DC bus voltage $V_{dc}$, and calculating a current switch loss power $P'_{sw}(V_{dc})$;
calculating a current loss power $P'_{loss}(V_{dc})$ based

on the current switch loss power $P'_{sw}(V_{dc})$ and the AC current-related loss power $P_{iacloss}(V_0)$; and calculating a current DC power $P_{dc}$ based on the current loss power $P'_{loss}(V_{dc})$ and a current AC power $P_{ac}$, and then calculating a DC current $\overline{i_{dc}}$ according to the DC bus voltage $V_{dc}$.

Preferably, the step of calculating the AC current-related loss power $P_{iactoss}(V_0)$ based on the loss power $P_{loss}(V_0)$ and the switch loss power $P_{sw}(V_0)$ includes calculating the AC current-related loss power $P_{iactoss}(V_0)$ according to $P_{iacloss}(V_0) = P_{loss}(V_0) - P_{sw}(V_0)$.

Preferably, the step of in the actual operation environment of the motor and motor controller, obtaining the actual DC bus voltage $V_{dc}$, and calculating the current switch loss power $P'_{sw}(V_{dc})$ includes:

in the actual operation environment of the motor and motor controller, calculating the current switch loss power $P'_{sw}(V_{dc})$ according to
$$P'_{sw}(V_{dc}) = \frac{V_{dc}}{V_0} \cdot P_{sw}(V_0);$$
the step of calculating the current loss power $P'_{loss}(V_{dc})$ based on the current switch loss power $P'_{sw}(V_{dc})$ and the AC current-related loss power $P_{iacloss}(V_0)$ includes:

calculating the current loss power $P'_{loss}(V_{dc})$ according to
$$P'_{loss}(V_{dc}) = P'_{sw}(V_{dc}) + P_{iacloss}(V_0).$$

Preferably, the step of calculating the current DC power $P_{dc}$ based on the current loss power $P'_{loss}(V_{dc})$ and the current AC power $P_{ac}$, and then calculating the DC current $\overline{i_{dc}}$ according to the DC bus voltage $V_{dc}$ includes calculating the current efficiency $\eta_{MCU}$ according to $\eta_{MCU} = \frac{P_{ac}}{P_{dc}}$, where, $P_{dc} = P_{ac} + P'_{loss}(V_{dc})$, and calculating the DC current $\overline{i_{dc}}$ according to $\overline{i_{dc}} = \frac{P_{ac}}{V_{dc} \cdot \eta_{MCU}}$.

Preferably, between the step of calculating an AC current-related loss power $P_{iactoss}(V_0)$ based on the loss power $P_{loss}(V_0)$ and the switch loss power $P_{sw}(V_0)$ and the step of in the actual operation environment of the motor and motor controller, obtaining an actual DC bus voltage $V_{dc}$, and calculating a current switch loss power

$P'_{sw}(V_{dc})$ , includes:

storing the loss power $P_{loss}(V_0)$, the switch loss power $P_{sw}(V_0)$, the AC current-related loss power $P_{iacloss}(V_0)$, the DC bus voltage $V_0$, the motor torque and the speed to a DC voltage-loss table.

the step of calculating a current loss power $P'_{loss}(V_{dc})$ based on the current switch loss power $P'_{sw}(V_{dc})$ and the AC current-related loss power $P_{iacloss}(V_0)$ includes:

scanning the DC voltage-loss table according to the torque and speed of the current motor to call the switch loss power $P_{sw}(V_0)$ and the AC current-related loss power $P_{iacloss}(V_0)$ corresponding to the torque and speed of the current motor in the DC voltage-loss table.

The present invention also discloses a DC current estimation system based on DC bus voltage, comprising a test module and a motor applied in an actual operation environment, the motor is connected to a control module,
the test module is configured to:

output a DC bus voltage $V_0$ of a motor controller in a test environment, and calibrate a loss power $P_{loss}(V_0)$ under the DC bus voltage $V_0$;
calibrate and measure a switch loss power $P_{sw}(V_0)$ of the power module of the motor controller; and
calculate an AC current-related loss power $P_{iacloss}(V_0)$ based on the loss power $P_{loss}(V_0)$ and the switch loss power $P_{sw}(V_0)$,
the control module is configured to:

in the actual operation environment of the motor and motor controller, obtain an actual DC bus voltage $V_{dc}$, and calculate a current switch loss power $P'_{sw}(V_{dc})$ ;
calculate a current loss power $P'_{loss}(V_{dc})$ based on the current switch loss power $P'_{sw}(V_{dc})$ and the AC current-related loss power $P_{iacloss}(V_0)$; and
calculate a current DC power $P_{dc}$ based on the current loss power $P'_{loss}(V_{dc})$ and a current AC power $P_{ac}$, and then calculate a DC current $\overline{i_{dc}}$ according to the DC bus voltage $V_{dc}$.

Preferably, the test module calculates the AC current-related loss power $P_{iacloss}(V_0)$ according to $P_{iacloss}(V_0) = P_{loss}(V_0) - P_{sw}(V_0)$.
Preferably, the control module calculates the current switch loss power $P'_{sw}(V_{dc})$ according to

$P'_{sw}(V_{dc}) = \frac{V_{dc}}{V_0} \cdot P_{sw}(V_0)$ , and calculates the current loss power $P'_{loss}(V_{dc})$ according to $P'_{loss}(V_{dc}) = P'_{sw}(V_{dc}) + P_{iacloss}(V_0)$ .

Preferably, the control module calculates the current efficiency $\eta_{MCU}$ according to $\eta_{MCU} = \frac{P_{ac}}{P_{dc}}$, where, $P_{dc} = P_{ac} + P'_{loss}(V_{dc})$ , and calculates the DC current $\overline{i_{dc}}$ according to $\overline{i_{dc}} = \frac{P_{ac}}{V_{dc} \cdot \eta_{MCU}}$ .

Preferably, a test module further includes a DC voltage-loss table, which stores the loss power $P_{loss}(V_0)$, the switch loss power $P_{sw}(V_0)$, the AC current-related loss power $P_{iacloss}(V_0)$, the DC bus voltage $V_0$, and the torque and speed of the motor, and which is sent to the control module.
The control module scans the DC voltage-loss table according to the torque and speed of the current motor to call the switch loss power $P_{sw}(V_0)$ and the AC current-related loss power $P_{iacloss}(V_0)$ corresponding to the torque and speed of the current motor in the DC voltage-loss table.
Compared with the prior art, the above-mentioned technical solution has the following beneficial effects:

1. An accurate calculation gives the DC current value of the motor controller, simplifying the internal structure of the motor controller.
2. In an actual operation, it is necessary for the corresponding table to only store one set of data to calculate the DC current under any DC bus voltage, so as to raise the speed of the data's calling and calculation.

**BRIEF DESCRIPTION OF THE DRAWINGS**

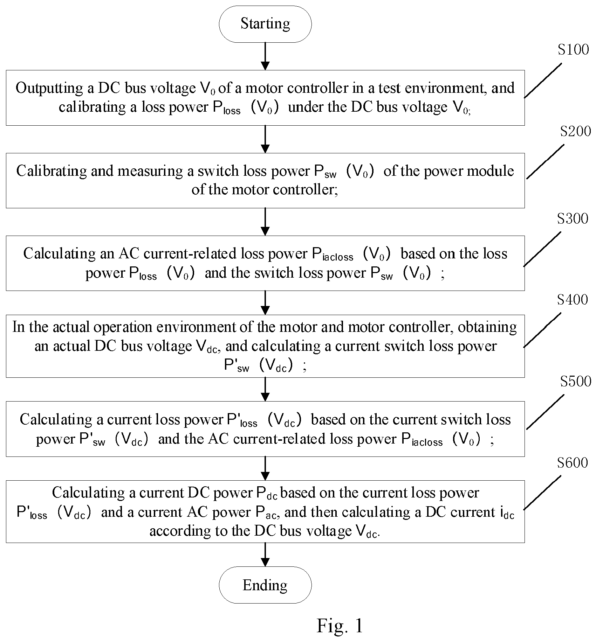

FIG.1 is a schematic flowchart of the DC current estimation method according with a preferred embodiment of the present invention.

**DETAILED DESCRIPTION OF SOME EMBODIMENTS**

The advantages of the present invention are further described below in combination with the drawings and specific embodiments.
Exemplary examples will be described herein in detail, and the typical example thereof presents in the drawings. When the following description refers to the drawings, unless otherwise indicated, the same numbers in different drawings indicate the same or similar elements. The embodiments described in the following exemplary examples do not represent all embodiments consistent with the present disclosure. On the contrary, they are merely examples of the device and the method consistent with some aspects of the present disclosure as detailed in the appended claims.

The terms used in the present disclosure are only for the purpose of describing specific examples, not intended to limit the present disclosure. The singular of "a", "said" and "the" used in the present disclosure and appended claims is also intended to include plural, unless other meanings mentioned above and below are clearly indicated. It should also be understood that the term "and/or" used herein refers to any or all possible combinations incorporating one or more associated listed items.

It should be understood that although the terms such as first, second, third and the like may be used in the present disclosure to describe various information, these information should not be limited to these terms. These terms are only used to distinguish identical kinds of information from each other. For example, within the present disclosure, a first information may also be referred to as a second information, similarly, a second information may also be referred to as a first information. According to the context, the word "if" as used herein can be interpreted as "when" or "in the case that" or "depending on".

In the description of the present invention, it should be understood that the terms such as "longitudinal", " transverse", "upper", "lower", "front", "rear", "left", "right", "vertical", "horizontal", "top", "bottom", "inner", "outer" and the like indicating orientational or positional relations are based on the orientational or positional relations shown in the drawings, only for the convenience of describing the present invention and simplifying the description, instead of indicating or implying that the pointed device or element must have a specific orientation, and be arranged and operated in a specific orientation, therefore they cannot be understood as limitations imposed on the present invention.

In the invention, unless otherwise clearly defined and limited, it should be noted that the terms such as "installation", "connection", "interconnection " should be construed broadly. For example, it may be a a mechanical connection or an electrical connection, it may be an internal passage between two components, it may be a direct connection, or an indirect connection through an intermediate medium, a person skilled in the art can understand the specific meaning of the above-mentioned terms in the invention according to specific circumstances.

In the following description, the suffixes such as "module", "part" or "unit" used to indicate elements are only for the convenience of describing the present invention, and have no specific meaning in themselves. Therefore, "modules" and "parts" can be commingled for use.

As referred to FIG. 1, which is a schematic flowchart of the DC current estimation method according with a preferred embodiment of the present invention. This example pertains to the estimation of DC current of motors based on DC bus voltage, which includes the following steps.

S100: Outputting a DC bus voltage $V_0$ of a motor controller in a test environment, and calibrating a loss power $P_{loss}(V_0)$ under the DC bus voltage $V_0$.

The method starts from studying motor states at any DC bus voltage $V_0$ in a test environment, that is, simulating a motor, or getting a real motor, and outputting a DC bus voltage $V_0$ under the simulation of a battery or a battery simulator. The DC bus voltage $V_0$ can be valued as any figure. Under the DC bus voltage $V_0$, the motor controller (or the large system composed of the motor and motor controller) operates with a loss power $P_{loss}(V_0)$, which is the energy consumed internally during the operation of the motor. The value of the loss power $P_{loss}(V_0)$ can be calibrated in simulation software, or calculated based on input power and output power calibration at a real motor.

S200: Calibrating and measuring a switch loss power $P_{sw}(V_0)$ of the power module of the motor controller.

The switch loss power $P_{sw}(V_0)$ of the power module of the motor controller can be calibrated and measured by means of a double-pulse test, a data book and the likes. The double-pulse test usually involves a DC power supply, a bus support capacitor, a absorption capacitor, a drive circuit, a tested IGBT, a load inductor, an oscilloscope, a voltage probe and a Rogowski coil. At a first pulse, the upper tube of the IGBT is isolated, and its lower tube conducts after receiving the pulse, then the bus voltage passes through the load inductor L, forming a circuit in the lower tube of the IGBT, so that the current in the inductor increases due to the existence of the voltage. The current in the inductor can be calculated out by di=dt*(U/L). Different peak currents can be obtained by simultaneously adjusting the bus voltage, inductor size and conduction time. At the end of the first pulse, the IGBT is switched off, and the current in the inductor flows back through the diode of the upper tube. Due to the existence of stray inductance, the current cannot change abruptly, causing a spike voltage at the moment of switching off. The switching off peak voltage can be obtained by U=L*di/dt. Before sending a second pulse, the diode of the upper tube is in a flowback conduction state. After sending the second pulse, the diode of the upper tube is reversely recovered, this current will flow through the lower tube, at the same time the current in the inductor continues to rise. A larger voltage spike will occur in the lower tube at switching off. The reverse recovery characteristics of the diode can be observed only depending on the observation of the waveform of the pulse at switching on. Therefore, the switch loss power $P_{sw}(V_0)$ of the power module of the motor controller is calibrated and measured based on this double-pulse test, so is the value of loss power when the switch component connected to the motor is powered on.

S300: Calculating an AC current-related loss power $P_{iacloss}(V_0)$ based on the loss power $P_{loss}(V_0)$ and

the switch loss power $P_{sw}(V_0)$.

As the loss power $P_{loss}(V_0)$ under the DC bus voltage $V_0$ is caused by several factors, this loss power $P_{loss}(V_0)$ will divides into the switch loss power $P_{sw}(V_0)$ arising from the operation of the switching components, as well as an AC current-related loss power $P_{iacloss}(V_0)$ besides the switch loss $P_{sw}(V_0)$. Thus, the AC current-related loss power $P_{iactoss}(V_0)$ is calculated based on the loss power $P_{loss}(V_0)$ and the switch loss power $P_{sw}(V_0)$.

S400: In the actual operation environment of the motor and motor controller, obtaining an actual DC bus voltage $V_{dc}$, and calculating a current switch loss power $P'_{sw}(V_{dc})$.

With the AC current-related loss power $P_{others}(V_0)$ in the above test environment, it can be understood that the simulation of the test environment can be performed many times to obtain accurate switch loss power $P_{sw}(V_0)$. After the motor and motor controller are applied to a new energy vehicle, the motor is placed in an actual operation environment, and an actual output DC bus voltage $V_{dc}$ in the current operation environment is obtained by means of the controller connected to the motor. And further, the controller can also give or directly calculate out the current switch loss power $P'_{sw}(V_{dc})$. It can be understood that because the operating state of the switching component influences on the DC current, the current switch loss power $P'_{sw}(V_{dc})$ will also change accordingly with the change of the DC bus voltage $V_0$.

S500: Calculating a current loss power $P'_{loss}(V_{dc})$ based on the current switch loss power $P'_{sw}(V_{dc})$ and the AC current-related loss power $P_{iacloss}(V_0)$.

The current switch loss power $P'_{sw}(V_{dc})$ in an actual operation environment and the AC current-related loss power $P_{iactoss}(V_0)$ previously obtained after the simulation in the test environment are combined to calculate the current loss power $P'_{loss}(V_{dc})$, which is all the energy lost from the motor.

S600: Calculating a current DC power $P_{dc}$ based on the current loss power $P'_{loss}(V_{dc})$ and a current AC power $P_{ac}$, and then calculating a DC current $\overline{i_{dc}}$ according to the DC bus voltage $V_{dc}$.

Based on the current loss power $P'_{loss}(V_{dc})$ and a current AC power $P_{ac}$, a current DC power $P_{dc}$ can be calculated. Or, after obtaining the current loss power $P'_{loss}(V_{dc})$ and the DC bus voltage $V_{dc}$, the current efficiency $\eta_{MCU}$ can be calculated (in the preferred mode), and then the DC current $\overline{i_{dc}}$ can be calculated according to the measured current AC power $P_{ac}$ and DC bus voltage $V_{dc}$ of the motor. In an actual operation environment, the DC current $\overline{i_{dc}}$ can be calculated with the above configuration only by obtaining the DC bus voltage $V_{dc}$ in the current state. The data stored in the motor no longer needs any correspondence between the DC bus voltage $V_{dc}$ and the current efficiency $\eta_{MCU}$, reducing the amount of data to be stored, so as to raise the speed of the calculation of the DC current $\overline{i_{dc}}$.

It can be understood that the current AC power $P_{ac}$ can be calculated based on the following formula.

$P_{ac}=1.5*(V_d*i_d+V_q*i_q)$, d and q represent quantity of electricity in a direct-axis and quadrature-axis, respectively, $V_d$ is a d-axis voltage output by the motor controller, and so on.

In a preferred embodiment, the step S300 of calculating an AC current-related loss power $P_{iacloss}(V_0)$ based on the loss power $P_{loss}(V_0)$ and the switch loss power $P_{sw}(V_0)$ includes:
S310: calculating the AC current-related loss power $P_{iactoss}(V_0)$ according to $P_{iacloss}(V_0)=P_{loss}(V_0)-P_{sw}(V_0)$.

In a further preferred embodiment, the step S400 of in the actual operation environment of the motor and motor controller, obtaining an actual DC bus voltage $V_{dc}$, and calculating a current switch loss power $P'_{sw}(V_{dc})$ includes:
S410: in the actual operation environment of the motor and motor controller, calculating the current switch loss power $P'_{sw}(V_{dc})$ according to

$$P'_{sw}(V_{dc}) = \frac{V_{dc}}{V_0} \cdot P_{sw}(V_0)$$

. It can be understood that, in S410, the current switch loss power $P'_{sw}(V_{dc})$ is linearly calculated according to the ratio of the DC bus voltage $V_{dc}$ to the DC bus voltage $V_0$ in the test environment (herein, the change relation between the current switch loss power $P'_{sw}(V_{dc})$ and the switch loss power $P_{sw}(V_0)$ is analogized as the linear change of the DC bus voltage $V_{dc}$ with the DC bus voltage $V_0$, so as to save calculation).

Accordingly, the step S500 of calculating a current loss power $P'_{loss}(V_{dc})$ based on the current switch loss power $P'_{sw}(V_{dc})$ and the AC current-related loss power $P_{iacloss}(V_0)$ includes

S510: calculating the current loss power $P'_{loss}(V_{dc})$ according to

$$P'_{loss}(V_{dc}) = P'_{sw}(V_{dc}) + P_{iacloss}(V_0)$$

. In this embodiment, the AC current-related loss power $P_{iactoss}(V_0)$ generated by the motor is mainly ascribed to the conduction loss of the switching component for the motor controller. Because the conduction loss is determined by the conduction voltage drop of the switching component and the AC current, the AC current-related loss power $P_{iacloss}(V_0)$ formed through the above combination basically does not vary under different DC bus voltages $V_0$.

Therefore, the AC current-related loss power $P_{iacloss}(V_0)$ in the test environment can be directly applied to calculate the current loss power $P'_{loss}(V_{dc})$.

Further, the step S600 of calculating a current DC power $P_{dc}$ based on the current loss power $P'_{loss}(V_{dc})$ and a current AC power $P_{ac}$, and then calculating a DC current $\overline{i_{dc}}$ according to the DC bus voltage $V_{dc}$ includes the following sub steps.

S610: Calculating the current efficiency $\eta_{MCU}$ according to $\eta_{MCU} = \dfrac{P_{ac}}{P_{dc}}$, where, $P_{dc} = P_{ac} + P'_{loss}(V_{dc})$, and the current AC power $P_{ac}$ can be directly measured and applied by the controller connected to the motor. Based on the above formula, the current efficiency $\eta_{MCU}$ of the motor can be calculated, so that the MCU efficiency can be obtained under different DC bus voltages.

S620: Calculating the DC current $\overline{i_{dc}}$ according to $\overline{i_{dc}} = \dfrac{P_{ac}}{V_{dc} \cdot \eta_{MCU}}$.

Finally, on the basis of the current efficiency $\eta_{MCU}$, the DC current $\overline{i_{dc}}$ can be quickly calculated.

In another preferred or optional embodiment, between the step S300 of calculating an AC current-related loss power $P_{iactoss}(V_0)$ based on the loss power $P_{loss}(V_0)$ and the switch loss power $P_{sw}(V_0)$ and the step S400 of in the actual operation environment of the motor and motor controller, obtaining an actual DC bus voltage $V_{dc}$, and calculating a current switch loss power $P'_{sw}(V_{dc})$, there is the step S700 that includes storing the loss power $P_{loss}(V_0)$, the switch loss power $P_{sw}(V_0)$, the AC current-related loss power $P_{iacloss}(V_0)$, the DC bus voltage $V_0$, the motor torque and the speed to a DC voltage-loss table. That is, in this embodiment, the DC voltage-loss table only needs to store three sets of data, without necessity to store the MCU efficiency under each DC bus voltage $V_{dc}$.

Further, the step S500 of calculating a current loss power $P'_{loss}(V_{dc})$ based on the current switch loss power $P'_{sw}(V_{dc})$ and the AC current-related loss power $P_{iactoss}(V_0)$ includes:

S520: scanning the DC voltage-loss table according to the torque and speed of the current motor to call the switch loss power $P_{sw}(V_0)$ and the AC current-related loss power $P_{iactoss}(V_0)$ corresponding to the torque and speed of the current motor in the DC voltage-loss table.

On the other hand, the present invention also provides a DC current estimation system based on DC bus voltage, comprising a test module and a motor applied in an actual operation environment, the motor is connected to a control module, the test module is configured to: output a DC bus voltage $V_0$ of a motor controller in a test environment, and calibrate a loss power $P_{loss}(V_0)$ under the DC bus voltage $V_0$; calibrate and measure a switch loss power $P_{sw}(V_0)$ of the power module of the motor controller; and calculate an AC current-related loss power $P_{iactoss}(V_0)$ based on the loss power $P_{loss}(V_0)$ and the switch loss power $P_{sw}(V_0)$, the control module is configured to: in the actual operation environment of the motor and motor controller, obtain an actual DC bus voltage $V_{dc}$, and calculate a current switch loss power $P'_{sw}(V_{dc})$; calculate a current loss power $P'_{loss}(V_{dc})$ based on the current switch loss power $P'_{sw}(V_{dc})$ and the AC current-related loss power $P_{iacloss}(V_0)$; and calculate a current DC power $P_{dc}$ based on the current loss power $P'_{loss}(V_{dc})$ and a current AC power $P_{ac}$, and then calculate a DC current $\overline{i_{dc}}$ according to the DC bus voltage $V_{dc}$.

In a preferred embodiment, the test module calculates the AC current-related loss power $P_{iacloss}(V_0)$ according to $P_{iacloss}(V_0) = P_{loss}(V_0) - P_{sw}(V_0)$.

In a preferred embodiment, the control module calculates the current switch loss power $P'_{sw}(V_{dc})$ according to $P'_{sw}(V_{dc}) = \dfrac{V_{dc}}{V_0} \cdot P_{sw}(V_0)$, and calculates the current loss power $P'_{loss}(V_{dc})$ according to $P'_{loss}(V_{dc}) = P'_{sw}(V_{dc}) + P_{iacloss}(V_0)$.

In a preferred embodiment, the control module calculates the current efficiency $\eta_{MCU}$ according to $\eta_{MCU} = \dfrac{P_{ac}}{P_{dc}}$, where, $P_{dc} = P_{ac} + P'_{loss}(V_{dc})$, and calculates the DC current $\overline{i_{dc}}$ according to $\overline{i_{dc}} = \dfrac{P_{ac}}{V_{dc} \cdot \eta_{MCU}}$.

In a preferred embodiment, a test module further includes a DC voltage-loss table, which stores the loss power $P_{loss}(V_0)$, the switch loss power $P_{sw}(V_0)$, the AC current-related loss power $P_{iacloss}(V_0)$, the DC bus voltage $V_0$, and the torque and speed of the motor, and which is sent to the control module. The control module scans the DC voltage-loss table according to the torque and speed of the current motor to call the switch loss power $P_{sw}(V_0)$ and the AC current-related loss power $P_{iactoss}(V_0)$ corresponding to the torque and speed of the current motor in the DC voltage-loss table.

**Claims**

1. A DC current estimation method based on DC bus voltage comprising the following steps:

outputting a DC bus voltage $V_0$ of a motor controller in a test environment, and calibrating a loss power $P_{loss}(V_0)$ under said DC bus voltage $V_0$;

calibrating and measuring a switch loss power $P_{sw}(V_0)$ of the power module of said motor controller;

calculating an AC current-related loss power $P_{iacloss}(V_0)$ based on said loss power $P_{loss}(V_0)$ and said switch loss power $P_{sw}(V_0)$;

in the actual operation environment of said motor and motor controller, obtaining an actual DC bus voltage $V_{dc}$, and calculating a current switch loss power $P'_{sw}(V_{dc})$;

calculating a current loss power $P'_{loss}(V_{dc})$ based on the current switch loss power $P'_{sw}(V_{dc})$ and the AC current-related loss power $P_{iacloss}(V_0)$; and

calculating a current DC power $P_{dc}$ based on said current loss power $P_{loss}(V_{dc})$ and a current AC power $P_{ac}$, and then calculating a DC current $\overline{i_{dc}}$ according to said DC bus voltage $V_{dc}$.

2. The DC current estimation method according to claim 1, wherein said step of calculating said AC current-related loss power $P_{iactoss}(V_0)$ based on said loss power $P_{loss}(V_0)$ and said switch loss power $P_{sw}(V_0)$ includes calculating said AC current-related loss power $P_{iactoss}(V_0)$ according to $P_{iacloss}(V_0) = P_{loss}(V_0) - P_{sw}(V_0)$.

3. The DC current estimation method according to claim 2, wherein said step of in said actual operation environment of said motor and motor controller, obtaining said actual DC bus voltage $V_{dc}$, and calculating said current switch loss power $P'_{sw}(V_{dc})$ includes:

in said actual operation environment of said motor and motor controller, calculating said current switch loss power $P'_{sw}(V_{dc})$ according to

$$P'_{sw}(V_{dc}) = \frac{V_{dc}}{V_0} \cdot P_{sw}(V_0)$$

said step of calculating said current loss power $P'_{loss}(V_{dc})$ based on said current switch loss power $P'_{sw}(V_{dc})$ and said AC current-related loss power $P_{iacloss}(V_0)$ includes:

calculating said current loss power $P'_{loss}(V_{dc})$ according to

$$P'_{loss}(V_{dc}) = P'_{sw}(V_{dc}) + P_{iacloss}(V_0).$$

4. The DC current estimation method according to claim 3, wherein said step of calculating said current DC power $P_{dc}$ based on said current loss power $P'_{loss}(V_{dc})$ and said current AC power $P_{ac}$, and then calculating said DC current $\overline{i_{dc}}$ according to said DC bus voltage $V_{dc}$ includes: calculating said current efficiency $\eta_{MCU}$ according to $\eta_{MCU} = \dfrac{P_{ac}}{P_{dc}}$, where, $P_{dc} = P_{ac} + P'_{loss}\ (V_{dc})$, and calculating said DC current $\overline{i_{dc}}$ according to $\overline{i_{dc}} = \dfrac{P_{ac}}{V_{dc} \cdot \eta_{MCU}}$.

5. A DC current estimation system based on DC bus voltage, comprising a test module and a motor applied in an actual operation environment, wherein said motor is connected to a control module, said test module is configured to:

output a DC bus voltage $V_0$ of a motor controller in a test environment, and calibrate a loss power $P_{loss}(V_0)$ under said DC bus voltage $V_0$;

calibrate and measure a switch loss power $P_{sw}(V_0)$ of the power module of said motor controller; and

calculate an AC current-related loss power $P_{iacloss}(V_0)$ based on said loss power $P_{loss}(V_0)$ and said switch loss power $P_{sw}(V_0)$,

said control module is configured to:

in said actual operation environment of said motor and motor controller, obtain an actual DC bus voltage $V_{dc}$, and calculate a current switch loss power $P'_{sw}(V_{dc})$;

calculate a current loss power $P'_{loss}(V_{dc})$ based on said current switch loss power $P'_{sw}(V_{dc})$ and said AC current-related loss power $P_{iacloss}(V_0)$; and

calculate a current DC power $P_{dc}$ based on said current loss power $P_{loss}(V_{dc})$ and a current AC power $P_{ac}$, and then calculate a DC current $\overline{i_{dc}}$ according to the DC bus voltage $V_{dc}$.

6. The DC current estimation system according to claim 5, wherein said test module calculates the AC current-related loss power $P_{iacloss}(V_0)$ according to $P_{iactoss}(V_0) = P_{loss}(V_0) - P_{sw}(V_0)$.

7. The DC current estimation system according to claim 6, wherein said control module calculates said current switch loss power $P'_{sw}(V_{dc})$ according to

$$P'_{sw}(V_{dc}) = \frac{V_{dc}}{V_0} \cdot P_{sw}(V_0),$$

, and calculates said current loss power $P'_{loss}(V_{dc})$ according to

$$P'_{loss}(V_{dc}) = P'_{sw}(V_{dc}) + P_{iacloss}(V_0).$$

**8.** The DC current estimation system according to claim 7, wherein said control module calculates said current efficiency $\eta_{MCU}$ according to $\eta_{MCU} = \frac{P_{ac}}{P_{dc}}$,

where, $P_{dc} = P_{ac} + P'_{loss}(V_{dc})$, and calculates said DC current $\overline{i_{dc}}$ according to $\overline{i_{dc}} = \frac{P_{ac}}{V_{dc} \cdot \eta_{MCU}}$.

**Patentansprüche**

**1.** Ein Verfahren zur Schätzung eines Gleichstroms basierend auf einer DC-Busspannung, das die folgenden Schritte umfasst:

Ausgeben einer DC-Busspannung $V_0$ eines Motorcontrollers in einer Testumgebung und Kalibrieren einer Verlustleistung $P_{loss}(V_0)$ unter dieser DC-Busspannung $V_0$;
Kalibrieren und Messen einer Schaltverlustleistung $P_{sw}(V_0)$ des Leistungsmoduls des Motorcontrollers;
Berechnen einer wechselstrombezogenen Verlustleistung $P_{iacloss}(V_0)$ auf der Grundlage dieser Verlustleistung $P_{loss}(V_0)$ und dieser Schaltverlustleistung $P_{sw}(V_0)$;
Ermitteln einer tatsächlichen DC-Busspannung $V_{dc}$ in der tatsächlichen Betriebsumgebung des Motors und des Motorcontrollers, und Berechnen einer aktuellen Schaltverlustleistung $P'_{sw}(V_{dc})$;
Berechnen einer Stromverlustleistung $P'_{loss}(V_{dc})$ auf der Grundlage der aktuellen Schaltverlustleistung $P'_{sw}(V_{dc})$ und der wechselstrombezogenen Verlustleistung $P_{iacloss}(V_0)$, und
Berechnen einer aktuellen Gleichstromleistung $P_{dc}$ auf der Grundlage der aktuellen Verlustleistung $P'_{loss}(V_{dc})$ und einer aktuellen Wechselstromleistung $P_{ac}$ und anschließendes Berechnen eines Gleichstroms $\overline{i_{dc}}$ entsprechend der DC-Busspannung $V_{dc}$.

**2.** Das Verfahren zur Schätzung des Gleichstroms nach Anspruch 1, wobei der Schritt des Berechnens der wechselstrombezogenen Verlustleistung $P_{iacloss}(V_0)$ auf der Grundlage der Verlustleistung $P_{loss}(V_0)$ und der Schaltverlustleistung $P_{sw}(V_0)$ das Berechnen der wechselstrombezogenen Verlustleistung $P_{iacloss}(V_0)$ gemäß $P_{iacloss}(V_0) = P_{loss}(V_0) - P_{sw}(V_0)$ umfasst.

**3.** Das Verfahren zur Schätzung des Gleichstroms nach Anspruch 2, wobei der Schritt des Erhaltens der tatsächlichen DC-Busspannung $V_{dc}$ und des Berechnens der aktuellen Schaltverlustleistung $P'_{sw}(V_{dc})$ in der tatsächlichen Betriebsumgebung des Motors und des Motorcontrollers Folgendes umfasst:

Berechnen der aktuellen Schaltverlustleistung $P'_{sw}(V_{dc})$ in der tatsächlichen Betriebsumgebung des Motors und des Motorcontrollers gemäß $P'_{sw}(V_{dc}) = \frac{V_{dc}}{V_0} \cdot P_{sw}(V_0)$;
wobei der Schritt des Berechnens der aktuellen Verlustleistung $P'_{loss}(V_{dc})$ auf der Grundlage der aktuellen Schaltverlustleistung $P'_{sw}(V_{dc})$ und der wechselstrombezogenen Verlustleistung $P_{iacloss}(V_0)$ umfasst:
Berechnen der aktuellen Verlustleistung $P'_{loss}(V_{dc})$ gemäß $P'_{loss}(V_{dc}) = P'_{sw}(V_{dc}) + P_{iacloss}(V_0)$.

**4.** Das Verfahren zur Schätzung des Gleichstroms nach Anspruch 3, wobei der Schritt des Berechnens der aktuellen Gleichstromleistung $P_{dc}$ auf der Grundlage der aktuellen Verlustleistung $P'_{loss}(V_{dc})$ und der aktuellen Wechselstromleistung $P_{ac}$ und des anschließenden Berechnens des Gleichstroms $\overline{i_{dc}}$ gemäß der DC-Busspannung $V_{dc}$ umfasst: Berechnen der aktuellen Effizienz $\eta_{MCU}$ gemäß $\eta_{MCU} = \frac{P_{ac}}{P_{dc}}$, wobei $P_{dc} = P_{ac} + P'_{loss}(V_{dc})$, und Berechnen des Gleichstroms $\overline{i_{dc}}$ gemäß $\overline{i_{dc}} = \frac{P_{ac}}{V_{dc} \cdot \eta_{MCU}}$.

**5.** Ein Gleichstrom-Schätzsystem basierend auf der DC-Busspannung, das ein Testmodul und einen Motor umfasst, der in einer tatsächlichen Betriebsumgebung eingesetzt wird, wobei der Motor an ein Steuermodul angeschlossen ist, wobei das Testmodul konfiguriert ist zum:

Ausgeben einer DC-Busspannung $V_0$ eines Motorcontrollers in einer Testumgebung und Kalibrieren einer Verlustleistung $P_{loss}(V_0)$ unter dieser DC-Busspannung $V_0$;

Kalibrieren und Messen einer Schaltverlustleistung $P_{sw}(V_0)$ des Leistungsmoduls des Motorcontrollers; und

Berechnen einer wechselstrombezogenen Verlustleistung $P_{iacloss}(V_0)$ auf der Grundlage dieser Verlustleistung $P_{loss}(V_0)$und dieser Schaltverlustleistung $P_{sw}(V_0)$,

wobei das Steuermodul eingerichtet ist zum:

Ermitteln, in der tatsächlichen Betriebsumgebung des Motors und des Motorcontrollers, einer tatsächlichen DC-Busspannung $V_{dc}$ und Berechnen der aktuellen Schaltverlustleistung $P'_{sw}(V_{dc})$;

Berechnen einer aktuellen Verlustleistung $P'_{loss}(V_{dc})$ auf der Grundlage der aktuellen Schaltverlustleistung $P'_{sw}(V_{dc})$ und der wechselstrombezogenen Verlustleistung $P_{iacloss}(V_0)$, und

Berechnen einer aktuellen Gleichstromleistung $P_{dc}$ basierend auf der aktuellen Verlustleistung $P'_{loss}(V_{dc})$ und einer aktuellen Wechselstromleistung $P_{ac}$und darauf Berechnen eines Gleichstroms $\overline{i_{dc}}$ entsprechend der DC-Busspannung $V_{dc}$.

6. Das Gleichstrom-Schätzsystem gemäß Anspruch 5, wobei das Testmodul die wechselstrombezogene Verlustleistung $P_{iacloss}(V_0)$ gemäß $P_{iacloss}(V_0) = P_{loss}(V_0) - P_{sw}(V_0)$ berechnet.

7. Das Gleichstrom-Schätzsystem nach Anspruch 6, wobei das Steuermodul die aktuelle Schaltverlustleistung $P'_{sw}(V_{dc})$ gemäß

$$P'_{sw}(V_{dc}) = \frac{V_{dc}}{V_0} \cdot P_{sw}(V_0)$$

berechnet und die aktuelle Verlustleistung $P'_{loss}(V_{dc})$ gemäß

$$P'_{loss}(V_{dc}) = P'_{sw}(V_{dc}) + P_{iacloss}(V_0)$$

berechnet.

8. Das Gleichstrom-Schätzsystem nach Anspruch 7, wobei das Steuermodul die aktuelle Effizienz $\eta_{MCU}$ gemäß

$$\eta_{MCU} = \frac{P_{ac}}{P_{dc}}$$

berechnet, wobei

$$P_{dc} = P_{ac} + P'_{loss}(V_{dc})$$

, und den Gleich-

strom $\overline{i_{dc}}$ gemäß

$$\overline{i_{dc}} = \frac{P_{ac}}{V_{dc} \cdot \eta_{MCU}}$$

berechnet.

## Revendications

1. Une méthode d'estimation du courant continu basée sur la tension du bus continu, incluant les étapes suivantes :

générer une tension du bus continu $V_0$ d'un contrôleur de moteur dans un environnement test, et calibrer une perte de puissance $P_{loss}(V_0)$ sous ladite tension du bus continu $V_0$ ;

calibrer et mesurer une puissance de perte de commutation $P_{sw}(V_0)$ du module de puissance dudit contrôleur de moteur ;

calculer une puissance de perte liée au courant alternatif $P_{iacloss}(V_0)$ sur la base de ladite puissance de perte $P_{loss}(V_0)$ et de ladite puissance de perte de commutation $P_{sw}(V_0)$ ;

dans l'environnement de fonctionnement réel dudit moteur et dudit contrôleur de moteur, obtenir une tension du bus continu réelle $V_{dc}$, et calculer une puissance de perte de commutation actuelle $P'_{sw}(V_{dc})$ ;

calculer une puissance de perte de courant $P'_{loss}(V_{dc})$ sur la base de la puissance de perte de commutation actuelle $P'_{sw}(V_{dc})$ et la puissance de perte liée au courant alternatif $P_{iacloss}(V_0)$ ; et

calculer une puissance de courant continu actuelle $P_{dc}$ sur la base de ladite puissance de perte actuelle $P'_{loss}(V_{dc})$ et une puissance de courant alternatif actuelle $P_{ac}$, puis calculer un courant continu $\overline{i_{dc}}$ selon ladite tension du bus continu $V_{dc}$.

2. La méthode d'estimation du courant continu selon la revendication 1, tandis que ladite étape de calcul de ladite puissance de perte liée au courant alternatif $P_{iacloss}(V_0)$ basée sur ladite puissance de perte $P_{loss}(V_0)$ et ladite puissance de perte de commutation $P_{sw}(V_0)$ inclut le calcul de ladite puissance de perte liée au courant alternatif $P_{iacloss}(V_0)$ selon $P_{iactoss}(V_0) = P_{loss}(V_0) - P_{sw}(V_0)$.

3. La méthode d'estimation du courant continu selon la revendication 2, tandis que ladite étape consistant, dans ledit environnement de fonctionnement réel du moteur et dudit contrôleur de moteur, à obtenir ladite tension réelle du bus continu $V_{dc}$ et à calculer ladite puissance de perte de commutation actuelle $P'_{sw}(V_{dc})$ inclut :

dans ledit environnement de fonctionnement réel dudit moteur et dudit contrôleur de moteur, le calcul de ladite puissance de perte de commutation actuelle $P'_{sw}(V_{dc})$ selon

$$P'_{sw}(V_{dc}) = \frac{V_{dc}}{V_0} \cdot P_{sw}(V_0) ;$$

ladite étape de calcul de ladite puissance de perte actuelle $P'_{loss}(V_{dc})$ basée sur ladite puissance de perte de commutation actuelle $P'_{sw}(V_{dc})$ et ladite puissance de perte liée au courant alternatif $P_{iacloss}(V_0)$ inclut :
le calcul de la puissance de perte actuelle $P'_{loss}(V_{dc})$ selon

$$P'_{loss}(V_{dc}) = P'_{sw}(V_{dc}) + P_{iacloss}(V_0).$$

4.  La méthode d'estimation de courant continu selon la revendication 3, tandis que ladite étape consistant à calculer ladite puissance de courant continu actuelle $P_{dc}$ en fonction de ladite puissance de perte actuelle $P'_{loss}(V_{dc})$ et de ladite puissance de courant alternatif actuelle $P_{ac}$, puis à calculer ledit courant continu $\overline{i_{dc}}$ en fonction de ladite tension du bus continu $V_{dc}$ inclut : le calcul de l'efficacité actuelle $\eta_{MCU}$ selon $\eta_{MCU} = \frac{P_{ac}}{P_{dc}}$, où, , et le calcul dudit courant continu $\overline{i_{dc}}$ selon $\overline{i_{dc}} = \frac{P_{ac}}{V_{dc} \cdot \eta_{MCU}}$.

5.  Un système d'estimation du courant continu basé sur la tension du bus continu, comprenant un module d'essai et un moteur appliqué dans un environnement de fonctionnement réel, tandis que ledit moteur est connecté à un module de contrôle,
    ledit module d'essai est configuré pour :

    émettre une tension du bus continu $V_0$ d'un contrôleur de moteur dans un environnement d'essai, et calibrer une puissance de perte $P_{loss}(V_0)$ sous ladite tension du bus continu $V_0$ ;
    calibrer et mesurer une puissance de perte de commutation $P_{sw}(V_0)$ du module de puissance dudit contrôleur de moteur ; et
    calculer une puissance de perte liée au courant alternatif $P_{iacloss}(V_0)$ sur la base de ladite puissance de perte $P_{loss}(V_0)$ et de ladite puissance de perte de commutation $P_{sw}(V_0)$,
    ledit module de contrôle est configuré pour :

    dans ledit environnement de fonctionnement réel dudit moteur et dudit contrôleur de moteur, obtenir une tension du bus continu réelle $V_{dc}$, et calculer une puissance de perte de commutation actuelle $P_{sw}(V_{dc})$;
calculer une puissance de perte actuelle $P'_{loss}(V_{dc})$ basée sur ladite puissance de perte de commutation actuelle $P'_{sw}(V_{dc})$ et ladite puissance de perte liée au courant alternatif $P_{iacloss}(V_0)$ ; et
calculer une puissance de courant continu actuelle $P_{dc}$ basée sur ladite puissance de perte actuelle $P'_{loss}(V_{dc})$ et d'une puissance de courant alternatif actuelle $P_{ac}$, et puis calculer un courant continu $\overline{i_{dc}}$ en fonction de la tension du bus continu $V_{dc}$.

6.  Le système d'estimation du courant continu selon la revendication 5, tandis que ledit module d'essai calcule la puissance de perte liée au courant alternatif $P_{iacloss}(V_0)$ selon $P_{iacloss}(V_0) = P_{loss}(V_0) - P_{sw}(V_0)$.

7.  Le système d'estimation du courant continu selon la revendication 6, tandis que ledit module de contrôle calcule ladite puissance de perte de commutation actuelle $P'_{sw}(V_{dc})$ selon

    $$P'_{sw}(V_{dc}) = \frac{V_{dc}}{V_0} \cdot P_{sw}(V_0)$$, et calcule ladite puissance de perte actuelle $P'_{loss}(V_{dc})$ selon

    $$P'_{loss}(V_{dc}) = P'_{sw}(V_{dc}) + P_{iacloss}(V_0).$$

8.  Le système d'estimation du courant continu selon la revendication 7, tandis que ledit module de contrôle calcule ladite efficacité actuelle $\eta_{MCU}$ selon $\eta_{MCU} = \frac{P_{ac}}{P_{dc}}$, où, $P_{dc} = P_{ac} + P'_{loss}(V_{dc})$, et calcule ledit courant continu $\overline{i_{dc}}$ selon $\overline{i_{dc}} = \frac{P_{ac}}{V_{dc} \cdot \eta_{MCU}}$.

Starting

S100

Outputting a DC bus voltage $V_0$ of a motor controller in a test environment, and calibrating a loss power $P_{loss}$ $(V_0)$ under the DC bus voltage $V_0$;

S200

Calibrating and measuring a switch loss power $P_{sw}$ $(V_0)$ of the power module of the motor controller;

S300

Calculating an AC current-related loss power $P_{iacloss}$ $(V_0)$ based on the loss power $P_{loss}$ $(V_0)$ and the switch loss power $P_{sw}$ $(V_0)$ ;

S400

In the actual operation environment of the motor and motor controller, obtaining an actual DC bus voltage $V_{dc}$, and calculating a current switch loss power $P'_{sw}$ $(V_{dc})$ ;

S500

Calculating a current loss power $P'_{loss}$ $(V_{dc})$ based on the current switch loss power $P'_{sw}$ $(V_{dc})$ and the AC current-related loss power $P_{iacloss}$ $(V_0)$ ;

S600

Calculating a current DC power $P_{dc}$ based on the current loss power $P'_{loss}$ $(V_{dc})$ and a current AC power $P_{ac}$, and then calculating a DC current $i_{dc}$ according to the DC bus voltage $V_{dc}$.

Ending

Fig. 1

**EP 4 340 213 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 111628688